# EUROPEAN PATENT SPECIFICATION

(11) **EP 3 471 756 B1**
(45) Date of publication and mention of the grant of the patent: **30.07.2025**
(21) Application number: 17814127.1
(22) Date of filing: 15.06.2017
(51) Int. Cl.: A61K 38/39, A23L 13/50, B01D 61/14, C07K 1/34

(54) **PROCESS FOR PREPARING A PUMPABLE BROTH COMPOSITION**
VERFAHREN ZUR HERSTELLUNG EINER PUMPFÄHIGEN BOUILLONZUSAMMENSETZUNG
PROCÉDÉ DE PRÉPARATION D'UNE COMPOSITION DE BOUILLON POMPABLE

(30) Priority: 15.06.2016 US 201662350456 P; 20.02.2017 US 201762461058 P; 20.02.2017 US 201762461061 P
(43) Date of publication of application: 24.04.2019
(73) Proprietor: International Dehydrated Foods, Inc., Springfield, MO 65808 (US)
(72) Inventor: DAKE, Roger L., Springfield, MO 65810 (US); CAPPOZZO, Jack C., Glen Ellyn, Illinois 60137 (US); LYNCH, Stephanie, Springfield, MO 65804 (US)
(74) Representative: Dehns Germany Partnerschaft mbB
(86) International application number: PCT/US2017/037756
(87) International publication number: WO 2017/218827

(56) References cited:
- CN-A- 103 665 371
- JP-A- H09 121 819
- US-A1- 2004 253 678
- US-A1- 2005 170 060
- US-A1- 2011 250 316
- US-A1- 2012 135 110
- US-A1- 2016 066 611
- US-A1- 2016 066 611
- LI ET AL: "Removal of suspended solids from tuna spleen extract by microfiltration: A batch process design and improvement", BIOCHEMICAL ENGINEERING JOURNAL, ELSEVIER, AMSTERDAM, NL, vol. 38, no. 2, 24 December 2007 (2007-12-24), pages 226 - 233, XP022401226, ISSN: 1369-703X
- GARCÍA ET AL: "Membrane Filtration", 1 January 1999, BIOSEPARATION PROCESS SCIENCE,, PAGE(S) 146 - 163, XP009156289

## Description

### BACKGROUND

### 1. Field of the Invention

This disclosure relates to a method of making a pumpable composition like broth. More particularly, the disclosure relates to a pumpable composition prepared from poultry or other animal sources.

### 2. Description of Related Art

Broth prepared from animals (including poultry) has high nutrition values. However, most concentrated broth compositions are not pumpable (or pourable) and may be difficult to handle and transport.

Methods for preparing pumpable broth compositions have been disclosed. *See e.g.,* U.S. Patent Applications 14/210,284 and 14/850,405. However, existing methods typically require addition of enzymes or a raw extraction step.

Document US 2016/066611 A1, said U.S. Patent Application 14/850,405, relates to raw extraction of poultry parts to obtain a protein composition. Document US 2005/170060 A1 relates to a process for developing a low fat, concentrated meat broth.

### SUMMARY

The invention is defined by the method according to claim 1. The instrumentalities disclosed herein overcome the problems outlined above by providing a pumpable broth composition having high percentage of solids and relatively long shelf life. In one embodiment, no enzymes are used in the disclosed process. In another embodiment, no raw extraction step is used in the disclosed process. The composition may be prepared from an animal or plant source. Examples of animal sources may include but are not limited to meat or other body parts of birds (e.g., poultry), cattle (beef), pigs (pork), among others. Examples of birds may include but are not limited to chickens or turkeys.

In one embodiment of the invention, the disclosed process for making a broth composition that is pumpable or pourable at refrigerated temperature may include (a) applying a starting composition to a filtration means, (b) allowing the starting composition to pass through the filtration means, and (c) collecting permeate that passes through the filtration means to obtain the pumpable composition. In another embodiment, the composition obtained from step (c) has at least 50%, 60%, 70%, 80%, or 90% (w/w) solids. In another embodiment, the composition obtained from step (c) may be concentrated to obtain a pumpable composition that has at least 50%, 60%, 70%, 80%, or 90% (w/w) solids.

In one embodiment of the invention, starting broth or extracts prepared from an animal source ("starting composition" or "starting material") are passed through a filtration means to separate the flow into permeates and retentates. According to the invention, the starting composition is be applied to a filtration means, and allowed to pass through the filtration means. Permeate that passes through said filtration means may then be collected to obtain the pumpable composition. In one aspect, the filtration means may have a pore size of about 10 micrometers (µm), 5 µm, 2 µm, 500 nanometers (nm), 250 nm, 100 nm, 90 nm, 80 nm, 70 nm, 60 nm, 50 nm, or smaller. In another aspect, not being part of the invention, the filtration means may have pore size between 300 nm and 1,000 nm, between 100 nm and 500 nm, between 300 nm and 500 nm, or between 50 nm and 300 nm. In another aspect, the filtration means may have pore size between 10 nm and 50 nm.

In one aspect, the pumpable composition obtained according to the disclosed process may contain less collagen or collagen-derived proteins than the starting composition. That is, it contains less than 10%, and in particular less than 5%, 3%, 2%, or 1% (w/w) of collagen. According to the invention, the starting composition (broth or extract) is not pumpable, but the permeate is pumpable at 4 °C because significant amount of collagen or collagen-derived proteins is retained by the filtration means. In another aspect, the permeate or retentate may have higher levels of certain essential amino acids (EAA)/indispensable amino acids (IAA) than the starting composition.

According to the invention, the percentage of hydroxyproline by weight of total amino acids in the pumpable composition prepared according to the claimed process is less than 3%, or less than 2% (w/w).

In another embodiment of the invention, the percentage of proline by weight of total amino acids in the disclosed pumpable composition is less than 10%, less than 8%, less than 7%, or less than 5% (w/w).

In another embodiment of the invention, the percentage of glycine by weight of total amino acids in the disclosed pumpable composition is less than 15%, less than 12%, less than 11%, or less than 10% (w/w).

In another embodiment of the invention, the filtration means may include are not limited to microfiltration, ultrafiltration, nanofiltration, reverse osmosis, membrane or combination thereof. In another embodiment, the filtration means may also include ion-exchange and elution, dialysis, centrifugation, or preparative gel filtration, among others.

In one aspect of the invention, this filtration means may specifically retain certain amino acids or compounds, resulting in permeate or retentate having higher concentration of these amino acids or compounds than the starting broth or extracts. In one embodiment, the amino acids or compounds that are enriched in either the permeate or retentate may include but are not limited to collagen protein, peptides such as taurine, anserine, carnosine, creatine/creatinine, L-carnitine, choline, and other specific nutrients of value.

In another embodiment of the invention, the composition prepared according to the disclosed process may have 0.85, 0.80, 0.75, 0.7, 0.6, 0.5 or lower water activity. In one aspect, the higher solids of the disclosed pumpable broth composition may help control microbial growth and prevent spoilage of the broth products. In another aspect of the invention, the low water activity of the composition may help control microbial growth and prevent spoilage of the broth products. In one embodiment of the invention, the disclosed may be store at ambient (room) temperature for extended time, for example, for 10 days, 30 days, 60 days, 6 months, 12 months, or 24 months, without microbial contamination. In another embodiment, because of the longer shelf life, the disclosed composition may be stored and shipped without requiring refrigeration.

In one embodiment of the invention, the starting composition may be any broth (extracts) prepared from an animal source. In another embodiment of the invention, one or more enzymes may be used in the process of making the initial soluble protein compositions. In another embodiment of the invention, no extraneous enzymes are used in the process of preparing the starting composition or the final pumpable composition.

In one embodiment of the invention, salt(s) may be used in the disclosed process to help prepare the pumpable composition. In another embodiment, no salt is used in the disclosed process.

In another embodiment of the invention, the starting composition may be a suspension with insolubles that may be separated by centrifugation before the starting composition is applied to the filtration means. In another embodiment, the starting composition may be prepared from a composition in solid form (e.g., powder) and made into a liquid form before being applied to the filtration means.

The disclosed composition may be prepared from a starting material derived from an animal source. For instance, the starting material may be derived from chicken, turkey, beef, pork or other animal or poultry sources.

In one embodiment of the invention, the starting material may be prepared from raw materials. In another embodiment, the starting material may be prepared from previously cooked materials. The raw material may include but are not limited to meat, trims, bones, skin, other animal parts or combination thereof.

In another embodiment of the invention, the starting material may be in a substantially liquid form. The term "substantially liquid form" means that the starting material is mostly liquid but may contain minor amount of insoluble material.

In another embodiment of the invention, the starting material may be obtained by extracting raw mechanically separated poultry (MSP), mechanically separated chicken (MSC), or finely ground poultry pieces (such as poultry trims or ground poultry parts) with water at room temperature or lower. By way of example, the extraction may be conducted by adding water into raw MSC. The mixture can then be stirred to facilitate mixing and extracting. The ratio between the MSC and water in the extraction mixture may range from about 4:1 to about 1:20 by weight, from about 1:1 to about 1:4 by weight, or about 1:2 by weight. In another embodiment of the invention, the MSC and water mixture may be subject to centrifugation at the end of the extraction. The liquid phase resulting from the centrifugation may be collected and used as the starting material for preparing the pumpable broth composition of the present disclosure. In one aspect of this disclosure, the centrifugation may be performed at a speed of at least 1000 rpm, 2000 rpm, or at least 3500 rpm.

The starting material may be prepared on-site and may be used for making the present composition right after it is made fresh on-site. Alternatively, the starting material may be from packaged products or may be collected off-site.

In another embodiment of the invention, the pumpable composition obtained in step (c) is further subject to a step (e) to remove sodium from the pumpable composition. In one aspect, the level of sodium may be reduced by at least 30%, 50%, or 70% in step (e).

In another embodiment of the invention, the color of the pumpable composition obtained in step (c) is substantially lighter than the color of the starting composition. The color difference may be determined by human eyes or by an instrument, such as a spectrophotometer.

In another embodiment of the invention, the disclosed composition thus obtained may be used in numerous products. Examples of such products may include but are not limited to protein drink, smoothies, sports drink or nutritional beverages.

### DETAILED DESCRIPTION

This disclosure relates to a process for making a high protein composition from an animal source. In one aspect, the disclosed process may be used to make a pumpable composition from a composition that is not pumpable.

The term "refrigerated (or refrigeration) temperature" refers to a temperature ranging from about 0 °C to about 10 °C, for example, 4 °C.

The term "pumpable" or pourable" refers to the state of a composition having sufficient liquidity such that the composition may be poured by decanting or it may be passed through a pump without applying significant pressure. In one embodiment, the pumpable composition (e.g., broth) has a viscosity of 50 Pa·s (50000 cP) or lower at 25 °C.

In one embodiment of the invention, there are provided methods of making a high quality protein composition from poultry. Poultry (e.g., chicken or turkey) is widely consumed in numerous applications as a healthy, nutritious food. Chicken broth is also widely used as the foundation for many classic foods including soups, stews, chowders, gravies, and sauces.

As compared to other broth products, the disclosed compositions are easier to handle and provide a better balance of proteins and amino acids than regular broth prepared according to conventional methods.

In one aspect, the disclosed process may be used to turn lower value raw poultry materials into a high value protein powder or broth without using additives.

In one embodiment of the invention, the soluble protein compositions may be used as an ingredient in food or beverage products. In another embodiment of the invention, the disclosed composition may also be used to prepare protein drinks, smoothies, or other nutritional or sport beverages.

It is to be noted that, as used in this specification and the claims, the singular forms "a," "an," and "the" include plural referents unless the context clearly dictates otherwise. Thus, for example, reference to "a device" may include reference to one device, as well as two or more devices, unless the context clearly limits the reference to one device.

The terms "between" and "at least" as used herein are inclusive. For example, a range of "between 5 and 10" means any amount equal to or greater than 5 but equal to or smaller than 10.

### Examples

### Example 1 Preparation of pumpable broth by filtration

Frozen cooked chicken stock with 29% solids was received and thawed. The stock was then diluted to 12.85% solids, which was passed through a 50 nanometer ceramic membrane. The permeate was concentrated to 58% (w/w) solids. The concentrate had water activity measuring at 0.83. This permeate concentrate had high fluidity at refrigeration temperature (e.g., 4 C).

Amino analyses of the permeate and retentate show that hydroxyproline, proline, and glycine were much higher in the Retentate samples than in the Permeate. This result confirmed that the majority of collagen and gelatin proteins was in the Retentate fraction while the percentage of collagen (and collagen derived proteins) and gelatin proteins in the Permeate fraction was reduced. This reduction of collagen and gelatin proteins in the Permeate fraction likely contributed to the reduction in gel strength and the increase in fluidity.

**Table 1 Amino acid analyses of the permeate and retentate**

| Units | W/W% | Calculated to 100% solids | WIW% | Calculated to 100% solids |
|---|---|---|---|---|
| | Permeate | | Retentate | |
| Hydroxyproline | 0.27 | 1.16 | 0.83 | 4.07 |
| Aspartic Acid | 0.57 | 2.45 | 1.02 | 5.00 |
| Threonine | 0.27 | 1.16 | 0.40 | 1.96 |
| Serine | 0.29 | 1.24 | 0.42 | 2.06 |
| Glutamic Acid | 1.88 | 8.07 | 2.55 | 12.50 |
| Proline | 0.65 | 2.79 | 1.11 | 5.44 |
| Glycine | 1.02 | 4.38 | 1.89 | 9.26 |
| Alanine | 0.61 | 2.62 | 1.15 | 5.64 |
| Cysteine | 0.08 | 0.34 | 0.07 | 0.34 |
| Valine | 0.25 | 1.07 | 0.43 | 2.11 |
| Methionine | 0.10 | 0.43 | 0.21 | 1.03 |
| Isoleucine | 0.20 | 0.86 | 0.36 | 1.76 |
| Leucine | 0.36 | 1.55 | 0.79 | 3.87 |
| Tyrosine | 1.28 | 5.49 | 0.69 | 3.38 |
| Phenylalanine | 0.21 | 0.90 | 0.35 | 1.72 |
| | | | | |
| Hydroxylysine | 0.04 | 0.17 | 0.10 | 0.49 |
| Ornithine | 0.02 | 0.09 | 0.01 | 0.05 |
| Lysine | 0.55 | 2.36 | 1.05 | 5.15 |
| Histidine | 0.61 | 2.62 | 0.36 | 1.76 |
| Arginine | 0.41 | 1.76 | 0.93 | 4.56 |
| Tryptophan | 0.04 | 0.17 | 0.05 | 0.25 |
| | | | | |
| Total | 9.71 | | 14.77 | 72.40 |
| Crude Protein* | 17.77 | 76.27 | 18.28 | 89.61 |
| Potassium | 1.72 | 7.38 | 0.717 | 3.51 |
| Magnesium | 0.028 | 0.12 | 0.014 | 0.07 |
| Iron (ppm) | 12.4 | 53.22 | 8.51 | 41.72 |
| Zinc (ppm) | 3.60 | 15.45 | 2.28 | 11.18 |
| Calcium | 0.018 | 0.08 | 0.012 | 0.06 |
| Sodium | 0.775 | 3.33 | 0.342 | 1.68 |
| Phosphorus | 0.442 | 1.90 | 0.189 | 0.93 |

## Claims

1. A method of making a pumpable composition, comprising:
(a) applying a starting composition to a filtration means, said filtration means having a pore size of 100 nanometers (nm) or smaller, wherein the starting composition is a broth or an extract prepared from an animal source,
(b) allowing the starting composition to pass through the filtration means, and
(c) collecting permeate that passes through said filtration means to obtain said pumpable composition having a viscosity of 50 Pa·s (50000 cP) or lower at 25 °C,
wherein the starting composition comprises collagen and is not pumpable at refrigeration temperature,
wherein the permeate from step (c) has a collagen concentration of 10% (w/w) or lower, being less collagen than in the starting composition, and is pumpable at a refrigeration temperature being a temperature of 4 °C,
wherein hydroxyproline constitutes less than 3% (w/w) of total amino acids in said composition obtained in step (c), and
wherein said pumpable composition obtained in step (c) has at least 50% (w/w) solids.

2. The method of claim 1, wherein proline constitutes less than 7% (w/w) of total amino acids in said pumpable composition obtained in step (c), and/or wherein glycine constitutes less than 11% (w/w) of total amino acids in said pumpable composition obtained in step (c).

3. The method of claim 1, wherein said filtration means is selected from the group consisting of microfiltration, ultrafiltration, nanofiltration, reverse osmosis, membrane and combination thereof.

4. The method of claim 1, wherein said animal source is poultry.

5. The method of claim 1, wherein said starting composition is subjected to a separation step (d) before being applied to the filtration means, especially wherein said separation step (d) is carried out by centrifugation.

6. The method of claim 1, wherein said pumpable composition obtained in step (c) has a water activity of 0.85 or lower.

7. The method of claim 1, wherein said pumpable composition obtained in step (c) is shelf-stable.

8. The method of claim 1, wherein enzyme and/or salt is added to said starting composition before being applied to the filtration means.

9. The method of claim 1, further comprising a step (e) to remove sodium from the pumpable composition obtained in step (c), particularly wherein the level of sodium is reduced by at least 50% in step (e).

10. The method of claim 1, wherein the color of the pumpable composition obtained in step (c) is substantially different from the color of the starting composition, especially wherein the color of the pumpable composition obtained in step (c) is substantially lighter than the color of the starting composition.

11. The method of claim 1, wherein said starting composition is received frozen and is applied to said filtration means after having been thawed.

## Patentansprüche

1. Verfahren zur Herstellung einer pumpfähigen Zusammensetzung, umfassend:
(a) Aufbringen einer Ausgangszusammensetzung auf ein Filtrationsmittel, wobei das Filtrationsmittel eine Porengröße von 100 Nanometern (nm) oder weniger aufweist, wobei die Ausgangszusammensetzung eine Brühe oder ein Extrakt ist, die oder der aus einer tierischen Quelle hergestellt wird,
(b) Durchleiten der Ausgangszusammensetzung durch die Filtrationseinrichtung, und
(c) Sammeln des Permeats, das durch die Filtrationseinrichtung läuft, um die pumpfähige Zusammensetzung mit einer Viskosität von 50 Pa· s (50000 cP) oder weniger bei 25 °C zu erhalten,
wobei die Ausgangszusammensetzung Kollagen enthält und bei Kühltemperatur nicht pumpfähig ist,
wobei das Permeat aus Schritt (c) eine Kollagenkonzentration von 10 % (w/w) oder weniger aufweist, was weniger Kollagen als in der Ausgangszusammensetzung ist, und bei einer Kühltemperatur von 4 °C pumpfähig ist
wobei Hydroxyprolin weniger als 3% (w/w) der gesamten Aminosäuren in der in Schritt (c) erhaltenen Zusammensetzung ausmacht, und
wobei die in Schritt (c) erhaltene pumpfähige Zusammensetzung mindestens 50 % (w/w) Feststoffe aufweist

2. Verfahren nach Anspruch 1, wobei Prolin weniger als 7 % (w/w) der gesamten Aminosäuren in der in Schritt (c) erhaltenen pumpfähigen Zusammensetzung ausmacht, und/oder wobei Glycin weniger als 11 % (w/w) der gesamten Aminosäuren in der in Schritt (c) erhaltenen pumpfähigen Zusammensetzung ausmacht.

3. Verfahren nach Anspruch 1, wobei das Filtrationsmittel ausgewählt ist aus der Gruppe bestehend aus Mikrofiltration, Ultrafiltration, Nanofiltration, Umkehrosmose, Membran und einer Kombination davon.

4. Verfahren nach Anspruch 1, wobei die tierische Quelle Geflügel ist.

5. Verfahren nach Anspruch 1, wobei die Ausgangszusammensetzung einem Trennungsschritt (d) unterzogen wird, bevor sie auf die Filtrationseinrichtung aufgebracht wird, insbesondere wobei der Trennungsschritt (d) durch Zentrifugieren durchgeführt wird.

6. Verfahren nach Anspruch 1, wobei die in Schritt (c) erhaltene pumpbare Zusammensetzung eine Wasseraktivität von 0,85 oder weniger aufweist

7. Verfahren nach Anspruch 1, wobei die in Schritt (c) erhaltene pumpbare Zusammensetzung lagerstabil ist.

8. Verfahren nach Anspruch 1, wobei der Ausgangszusammensetzung Enzym und/oder Salz zugesetzt wird, bevor sie auf die Filtrationseinrichtung aufgebracht wird.

9. Verfahren nach Anspruch 1, das ferner einen Schritt (e) zur Entfernung von Natrium aus der in Schritt (c) erhaltenen pumpfähigen Zusammensetzung umfasst, wobei insbesondere der Natriumgehalt in Schritt (e) um mindestens 50 % reduziert wird.

10. Verfahren nach Anspruch 1, wobei die Farbe der in Schritt (c) erhaltenen pumpfähigen Zusammensetzung sich wesentlich von der Farbe der Ausgangszusammensetzung unterscheidet, insbesondere wobei die Farbe der in Schritt (c) erhaltenen pumpfähigen Zusammensetzung wesentlich heller ist als die Farbe der Ausgangszusammensetzung.

11. Verfahren nach Anspruch 1, wobei die Ausgangszusammensetzung gefroren empfangen und nach dem Auftauen auf die Filtrationsmittel aufgebracht wird.

## Revendications

1. Procédé de fabrication d'une composition pompable, comprenant :
(a) appliquer une composition de départ à un moyen de filtration, ce moyen de filtration ayant une taille de pore de 100 nanomètres (nm) ou moins, la composition de départ étant un bouillon ou un extrait préparé à partir d'une source animale,
(b) permettre à la composition de départ de passer à travers les moyens de filtration, et
(c) recueillir le perméat qui passe à travers lesdits moyens de filtration pour obtenir ladite composition pompable ayant une viscosité de 50 Pa· s (50000 cP) ou moins à 25 °C,
dans lequel la composition de départ comprend du collagène et n'est pas pompable à la température de réfrigération,
dans lequel le perméat de l'étape (c) a une concentration en collagène de 10 % (p/p) ou moins, soit moins de collagène que dans la composition de départ, et est pompable à une température de réfrigération de 4 °C
dans lequel l'hydroxyproline constitue moins de 3 % (p/p) des acides aminés totaux dans ladite composition obtenue à l'étape (c), et
dans lequel ladite composition pompable obtenue à l'étape (c) contient au moins 50 % (p/p) de solides

2. Procédé selon la revendication 1, dans lequel la proline constitue moins de 7 % (p/p) des acides aminés totaux dans ladite composition pompable obtenue à l'étape (c), et/ou dans laquelle la glycine constitue moins de 11 % (p/p) des acides aminés totaux dans ladite composition pompable obtenue à l'étape (c).

3. Procédé selon la revendication 1, dans lequel le moyen de filtration est choisi dans le groupe constitué par la microfiltration, l'ultrafiltration, la nanofiltration, l'osmose inverse, les membranes et leurs combinaisons.

4. Procédé selon la revendication 1, dans lequel la source animale est la volaille.

5. Procédé selon la revendication 1, dans lequel ladite composition de départ est soumise à une étape de séparation (d) avant d'être appliquée aux moyens de filtration, en particulier dans lequel ladite étape de séparation (d) est effectuée par centrifugation.

6. Procédé selon la revendication 1, dans lequel ladite composition pompable obtenue à l'étape (c) a une activité de l'eau inférieure ou égale à 0,85

7. Procédé selon la revendication 1, dans lequel la composition pompable obtenue à l'étape (c) est stable à l'étalage.

8. Procédé selon la revendication 1, dans lequel l'enzyme et/ou le sel sont ajoutés à la composition de départ avant d'être appliqués aux moyens de filtration.

9. Procédé selon la revendication 1, comprenant en outre une étape (e) pour éliminer le sodium de la composition pompable obtenue à l'étape (c), en particulier dans laquelle le niveau de sodium est réduit d'au moins 50 % à l'étape (e).

10. Procédé selon la revendication 1, dans lequel la couleur de la composition pompable obtenue à l'étape (c) est sensiblement différente de la couleur de la composition de départ, en particulier dans laquelle la couleur de la composition pompable obtenue à l'étape (c) est sensiblement plus claire que la couleur de la composition de départ.

11. Méthode de la revendication 1, dans laquelle la composition de départ est reçue congelée et est appliquée aux moyens de filtration après avoir été décongelée.
